(19) Europäisches Patentamt
European Patent Office
Office européen des brevets

(11) Veröffentlichungsnummer: **0 040 779**
**B1**

# (12) EUROPÄISCHE PATENTSCHRIFT

(45) Veröffentlichungstag der Patentschrift: **19.09.84**

(51) Int. Cl.³: **D 06 P 5/12**, C 09 B 29/40 // D06P3/872, D06P5/17

(21) Anmeldenummer: **81103782.9**

(22) Anmeldetag: **18.05.81**

(54) **Verfahren zur Herstellung von Reserveeffekten auf Polyester-Zellulose-Mischfaser-Textilien.**

(30) Priorität: **23.05.80 DE 3019726**

(43) Veröffentlichungstag der Anmeldung: **02.12.81 Patentblatt 81/48**

(45) Bekanntmachung des Hinweises auf die Patenterteilung: **19.09.84 Patentblatt 84/38**

(84) Benannte Vertragsstaaten: **CH DE FR GB IT LI**

(56) Entgegenhaltungen:
**EP - A - 0 013 378**
**DE - A - 2 326 522**
**DE - A - 3 022 429**
**FR - A - 2 023 947**
**US - A - 3 787 178**

(73) Patentinhaber: **CASSELLA Aktiengesellschaft, Hanauer Landstrasse 526, D-6000 Frankfurt am Main 61 (DE)**

(72) Erfinder: **Tappe, Horst, Dr., Ringstrasse 9, D-6057 Dietzenbach (DE)**
Erfinder: **Kindler, Horst, Dr., Birsteinerstrasse 14, D-6000 Frankfurt/Main 61 (DE)**
Erfinder: **Roth, Kurt, Breckenheimerstrasse 35, D-6238 Hofheim/Ts. (DE)**
Erfinder: **Ong, Sien Ling, Dr., Jahnstrasse 38, D-6238 Hofheim (DE)**

(74) Vertreter: **Urbach, Hans-Georg, Dr. et al, Hanauer Landstrasse 526, D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 040 779 B1

BUNDESDRUCKEREI BERLIN

**Beschreibung**

Auf dem Gebiet des Textildrucks war es seit jeher ein Problem, weiße oder farbige scharf begrenzte Muster auf tiefgefärbtem Hintergrund zu erzeugen. Insbesondere, wenn die Herstellung filigranartiger Muster auf dunklem Untergrund gewünscht wird, versagt der direkte Druck des Textilmaterials völlig. Um solche Dessins herzustellen, ist es seit langem bekannt, auf einer mit einem weißätzbaren Farbstoff hergestellten tiefen Hintergrundfärbung eine Ätzpaste in dem gewünschten Muster aufzudrukken und anschließend durch eine trockene oder nasse Wärmebehandlung den Farbstoff an den mit der Ätzpaste bedruckten Stellen zu zerstören. Nach dem Auswaschen der so erhaltenen Drucke wird das gewünschte Muster weiß auf dunklem Fond erhalten. Es ist auch bereits bekannt, den Ätzdruckpasten Farbstoffe zuzusetzen, die gegen das Ätzmittel resistent sind. In diesem Fall wird gleichzeitig mit der Zerstörung der Fondfärbung eine Färbung des Textilmaterials an den bedruckten Stellen durch den unzerstörbaren Farbstoff vorgenommen. Man erhält in diesem Fall farbige Drucke auf dunklem Fond. Farbige Drucke auf dunklem Fond können auch erhalten werden, wenn der dunkle Fond mit einer Mischung eines ätzbaren und eines andersfarbigen nichtätzbaren Farbstoffs hergestellt wird, indem man beide Farbstofftypen in die Klotzflotte einbringt.

Die Europäische Patentanmeldung 0 013 378 betrifft ein Verfahren zur Herstellung von Reserveeffekten auf Textilmaterialien auf Basis von Mischfasern aus Polyester und Cellulose, insbesondere Polyester-Baumwollfasern, durch Imprägnieren der Materialien mit Farbflotten, die neben üblichen Färbe- und Klotzhilfsmitteln Dispersions- und Reaktivfarbstoffe enthalten, die mit den Reservierungsmitteln reagieren und die gegebenenfalls weitere gegen die Reservierungsmittel beständige Dispersions- und Reaktivfarbstoffe enthalten, Trocknen oder Antrocknen der geklotzten Materialien und anschließendes Aufdrucken einer Reservepaste, die gewünschtenfalls neben dem Reservierungsmittel gegen das Reservierungsmittel beständige Dispersions- und Reaktivfarbstoffe enthält, Wärmebehandlung bei Temperaturen von 100 bis 190°C und daran anschließendes alkalisches Fixieren des Reaktivfarbstoffs in an sich bekannter Weise, dadurch gekennzeichnet, daß als ätzbare Dispersionsfarbstoffe solche der Formel I

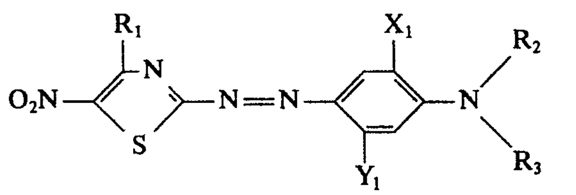

(I)

worin $R_1$ Wasserstoff, Cyan, gegebenenfalls substituiertes Alkyl oder Phenyl; $X_1$ Wasserstoff, Halogen, gegebenenfalls substituiertes Alkyl oder Alkoxy; $Y_1$ Wasserstoff, Halogen, gegebenenfalls substituiertes Alkyl oder Alkoxy, $-NH-CO-Y_2$, $-NH-SO_2-Y_2$ worin $Y_2$ für Alkyl, Phenyl oder Amino steht; $R_2$ Wasserstoff, ein gegebenenfalls substituiertes Alkyl oder Alkenyl; $R_3$ ein gegebenenfalls substituiertes Alkyl, Alkenyl oder Phenyl bedeuten oder solche der Formel II

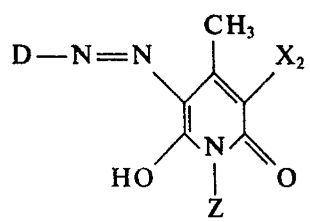

(II)

worin D für Phenyl steht, das gegebenenfalls mindestens einen Substituenten enthält; $X_2$ für Wasserstoff, Niederalkyl, Carbamoyl, Cyano, Chlor, Brom, Nitroso, Nitro, Niederalkylcarbonyl, Sulfamoyl, Niederalkylsulfonyl, Niederalkylcarbonylamino oder Niederalkoxycarbonyl und Z für Wasserstoff oder Niederalkyl steht; oder von wasserlöslichmachenden Gruppen freie Dispersionsfarbstoffe, die mindestens zwei Carbonsäureestergruppen enthalten, als ätzbare Reaktivfarbstoffe solche, die reaktive Reste der Formeln III bis VI

$$-SO_2-CH_2-CH_2-hal \qquad (III)$$

$$-SO_2-CH_2-CH_2-O-SO_3M \qquad (IV)$$

$$-NH-SO_2-CH_2-CH_2-O-SO_3M \qquad (V)$$

$$-SO_2-CH=CH_2 \qquad (VI)$$

worin M Wasserstoff oder ein Metallkation und hal Halogen bedeuten, enthalten, und eine Reservepaste, die als Reservierungsmittel a) ein Alkalisulfit oder aber ein Alkalihydrogen-sulfit in Kombination mit Alkalicarbonat oder Alkalihydrogencarbonat und gegebenenfalls einem Aldehyd und b) gegebenenfalls ein nichtionogenes Detergens enthält, eingesetzt werden.

Aus der US-Patentschrift 3 787 178 sind u. a. Farbstoffe der Formel

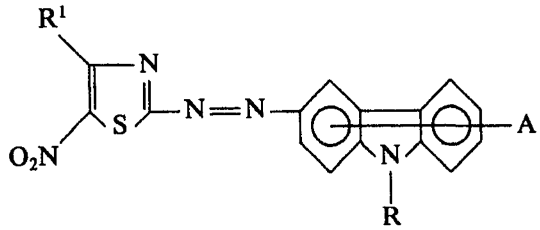

bekannt, wobei $R^1$ und A u. a. Wasserstoff bedeuten können und R u. a. für Hydroxyalkyl steht. Ein Farbstoff aus dieser dort definierten Gruppe entspricht der Formel

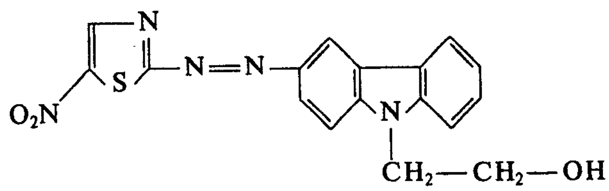

Diese US-Patentschrift gibt jedoch keinen Hinweis auf die erfindungsgemäße Einsatzmöglichkeit der Farbstoffe für ein Ätzdruckverfahren unter Verwendung alkalischer Ätzpasten.

In weiterer Ausbildung des Verfahrens der obengenannten EP-A-13 378 wurde gefunden, daß man auch sehr gute Reserveeffekte auf Textilmaterialien auf Basis von Mischfasern aus Polyester und Cellulose, insbesondere Polyester-Baumwollfasern erhält durch Imprägnieren der Materialien mit Farbflotten, die neben üblichen Färbe- und Klotzhilfsmitteln Dispersions- und Reaktivfarbstoffe enthalten, die mit den Reservierungsmitteln reagieren und die gegebenenfalls weitere gegen die Reservierungsmittel beständige Dispersions- und Reaktivfarbstoffe und gegebenenfalls Alkaliformiat enthalten, Trocknen oder Antrocknen der geklotzten Materialien und anschließendes Aufdrucken einer Reservepaste, die gewünschtenfalls neben dem Reservierungsmittel gegen das Reservierungsmittel beständige Dispersions- und Reaktivfarbstoffe enthält, Wärmebehandlung bei Temperaturen von 100 bis 190° C und gegebenenfalls daran anschließendes alkalisches Fixieren des Reaktivfarbstoffes in an sich bekannter Weise, wobei als ätzbare Dispersionsfarbstoffe solche der Formel VII

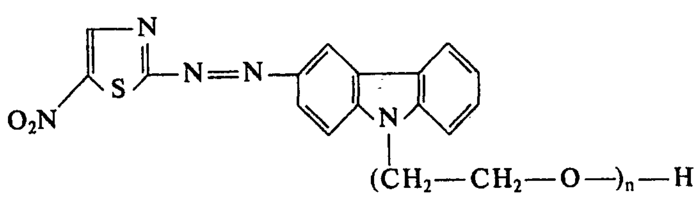

worin n eine Zahl von 1 bis 9, vorzugsweise 1 bis 5, bedeutet, eingesetzt werden, als ätzbare Reaktivfarbstoffe solche, die reaktive Reste der Formeln III bis VI

$$—SO_2—CH_2—CH_2—hal \quad (III)$$

$$—SO_2—CH_2—CH_2—O—SO_3M \quad (IV)$$

$$—NH—SO_2—CH_2—CH_2—O—SO_3M \quad (V)$$

$$—SO_2—CH{=}CH_2 \quad (VI)$$

worin M Wasserstoff oder ein Metallkation und hal Halogen bedeuten, enthalten, und eine Reservepaste, die als Reservierungsmittel a) ein Alkalisulfit oder aber ein Alkalihydrogen-sulfit in Kombination mit Alkalicarbonat oder Alkalihydrogencarbonat und gegebenenfalls einem Aldehyd und b) gegebenenfalls ein nichtionogenes Detergens enthält, eingesetzt werden.

Vorteilhaft, insbesondere im Hinblick auf die erzielbare Farbtiefe, ist der Einsatz von Mischungen von mehreren, in der Regel 2 bis 4, Farbstoffen der Formel VII, wobei die Anteile der Einzelfarbstoffe

zweckmäßigerweise zwischen 5 und 95%, insbesondere zwischen 10 und 40%, liegen.

Besonders bevorzugt ist der Einsatz von Farbstoffmischungen der Formel VII, worin n eine Zahl zwischen 1 und 5 ist. Die Durchführung des erfindungsgemäßen Verfahrens erfolgt in an sich bekannter Weise durch Klotzen des Textilmaterials aus Polyester- und Cellulosefasern mit Farbflotten, die einen oder mehrere der obengenannten alkalisch ätzbaren Dispersionsfarbstoffe und einen oder mehrere Reaktivfarbstoffe, die einen der obengenannten reaktiven Reste der Formeln III bis VI, vorzugsweise die $\beta$-Sulfatoäthylsulfonyl- oder $\beta$-Sulfatoäthylsulfonamid-Gruppen besitzen, neben den bekannten üblichen Färbereihilfsmitteln, wie beispielsweise Dispergiermitteln, Netzmitteln, Schaumdämpfungsmitteln und Klotzhilfsmitteln und, sofern Buntätzdrucke erzeugt werden sollen, zusätzlich gegen das Ätzmittel beständige Dispersions- und Reaktivfarbstoffe enthalten, und Abquetschen der geklotzten Gewebebahnen auf eine Flottenaufnahme von 50—120%. Anschließend werden die Gewebebahnen durch Warmluft mit eventueller vorausgehender Infrarotstrahlung getrocknet, wobei die Temperatur ca. 80 bis maximal etwa 150°C bei entsprechender Verkürzung der Zeit beträgt. Die so vorbereiteten Gewebebahnen werden dann mit der Ätzreservedruckpaste bedruckt, die die oben beschriebenen Reservierungsmittel sowie die in Druckpasten für den Textildruck bekannten Zusatzstoffe, insbesondere Verdickungsmittel, enthält. Anschließend werden die geklotzten und bedruckten textilen Flächengebilde einer Wärmebehandlung zwischen 100 und 190°C unterworfen. Die Wärmezufuhr erfolgt vorzugsweise durch überhitzten Wasserdampf. Die Hitzebehandlung bewirkt

a) an den mit der Reservepaste beduckten Stellen eine Inhibierung der reservierbaren Dispersions- und Reaktivfarbstoffe und eine Fixierung der gegebenenfalls vorhandenen nicht reservierbaren Dispersions- und Reaktivfarbstoffe,

b) an den nicht mit Reservepaste bedruckten Stellen eine Fixierung der Dispersionsfarbstoffe und, sofern die Klotzflotte ein Alkaliformiat enthalten hat, auch gleichzeitig der Reaktivfarbstoffe. Hierbei ist unter Inhibierung des Farbstoffes die durch das Reservierungsmittel hervorgerufene Änderung des Farbstoffmoleküls zu verstehen, die dazu führt, daß der betreffende Farbstoff das Substrat nicht mehr anfärbt. Bei dem Zweiphasen-Verfahren, d. h., sofern die Klotzflotte kein Alkaliformiat enthalten hat, erfolgt anschließend die Fixierung der Reaktivfarbstoffe in der Fondfärbung, d. h. an den nicht mit Reservepaste bedruckten Stellen.

Zum Schluß werden die Färbungen bzw. Drucke heiß und kalt gespült und getrocknet. Eine besondere Ausführungsform des erfindungsgemäßen Verfahrens besteht darin, daß die Klotzflotte außer reservierbaren Dispersions- und Reaktivfarbstoffen zusätzlich solche enthält, die gegen das Reservierungsmittel beständig sind und somit durch die erfindungsgemäß einzusetzenden Ätzreservedruckpasten nicht zerstört werden. Verfährt man im übrigen wie oben angegeben, so erhält man mehrfarbige Dessins. Eine weitere Ausführungsform des erfindungsgemäßen Verfahrens besteht darin, daß man die reservierbaren Farbstoffe nicht durch Klotzen mit einer Klotzflotte auf dem gesamten Gewebe appliziert, sondern ebenfals in Form von Druckpasten auf das Gewebe aufdruckt und anschließend mit der Ätzreservedruckpaste überdruckt. Fixierung und Fertigstellung der Textildrucke erfolgt dann anschließend wie oben bereits beschrieben. Auch bei diesem Verfahren ist es möglich, den als erstes aufgedruckten Farbdruckpasten Farbstoffe zuzusetzen, die gegen das Reservierungsmittel resistent sind. Auch in diesem Fall werden mehrfarbige Dessins erhalten. Eine weitere Möglichkeit zur Durchführung des erfindungsgemäßen Verfahrens besteht darin, daß man auf den mit reservierbaren Farbstoffen geklotzten oder bedruckten Fond Ätzreservedruckpasten aufdruckt, die ihrerseits gegen das Reservierungsmittel resistente Farbstoffe enthalten. Bei anschließender Fixierung und Fertigstellung der Textilmaterialien wie oben beschrieben werden auch hier mehrfarbige Dessins erhalten.

Die Dispersionsfarbstoffe der Formel VII liegen in den Klotzflotten bzw. in den Druckpasten in fein dispergierter Form vor, wie es für Dispersionsfarbstoffe üblich und bekannt ist, während die Reaktivfarbstoffe gelöst sind. Auch die Herstellung der Klotzflotten bzw. Druckpasten, die erfindungsgemäß einzusetzen sind, erfolgt in an sich bekannter Weise durch Mischen der Flotten- bzw. Druckpastenbestandteile mit der nötigen Menge Wasser und flüssigen feindispersen oder festen redispergierbaren Einstellungen der Dispersionsfarbstoffe sowie Lösungen bzw. Einstellungen der Reaktivfarbstoffe.

Es ist vorteilhaft, die in den Reservepasten neben den genannten Reservierungsmitteln üblichen Zusätze, insbesondere Verdickungsmittel, wie z. B. Alginate, Stärkeprodukte, synthetische polymere Verdickungsmittel, Mineralöle, hydrotrope Substanzen, wie beispielsweise Harnstoff, sowie Benutzung, Durchdringung und Farbstoffaufnahme fördernde Zusätze, nichtionogene Detergentien, wie z. B. Glycerin, und/oder Polyglykole, wie Polyäthylenglykol mit einem mittleren Molekulargewicht von 300 bis 400, durch Ester aus höhermolekularen Polyglykolen und Carbonsäuren zu ersetzen. Der Einsatz von Polyglykolestern wirkt sich besonders dann vorteilhaft aus, wenn Buntätzen hergestellt werden sollen, d. h., wenn an der mit der Reservepaste bedruckten Stelle gegen das Reservierungsmittel beständige Dispersions- und Reaktivfarbstoffe bei der Fondfärbung mitverwendet werden oder in der Reservepaste enthalten sind.

Polyglykolcarbonsäureester, die mit besonderem Vorteil in den erfindungsgemäß zu verwendenden Reservepasten eingesetzt werden können, sind beispielsweise in der deutschen Auslegeschrift 1 138 735 beschrieben.

Gemäß der DE-A-2 952 312 kann man bei der Herstellung von Druckpasten auf den üblichen Zusatz von Mineralölen verzichten, wenn man statt dessen den Druckpasten pro kg 30 bis 250 g, vorzugsweise 50 bis 150 g, eines Hilfsmittels der allgemeinen Formel VIII

$$C_nH_{2n} + 2\text{-}m[O(CH_2-CH(CH_3)O)_{x/m}-H]_m \qquad (VIII)$$

wobei n eine ganze Zahl von 2 bis 6, m eine ganze Zahl von 1 bis 6 und x eine Zahl von 20 bis 60 ist mit der Maßgabe, daß m kleiner oder gleich n ist, zusetzt.

Diese Maßnahme zur Einstellung der Konsistenz ist auch bei der Herstellung der erfindungsgemäß einzusetzenden Druckpasten von Vorteil. Bevorzugte erfindungsgemäß einzusetzende Druckpasten enthalten somit anstelle von Mineralöl pro kg 30 bis 250 g, vorzugsweise 50 bis 150 g, eines Hilfsmittels der oben angegebenen allgemeinen Formel VIII.

Besonders bevorzugt zum Einsatz in dem erfindungsgemäßen Verfahren sind Hilfsmittel der Formel VIII, in denen m = 1 ist.

Im Hinblick auf die Qualität des Warenbildes ist es auch beim vorliegenden Verfahren sehr vorteilhaft, wenn die eingesetzten Druckpasten zusätzlich zu den Hilfsmitteln der Formel VIII pro kg 0,2 bis 2 g Veresterungsprodukte von höhermolekularen Polyglykolen mit höheren Alkan- und Alkencarbonsäuren enthalten. Derartige Produkte sind bereits als Dispergiermittel und Emulgatoren bekannt und handelsüblich. Sie lassen sich durch die allgemeine Formel IX

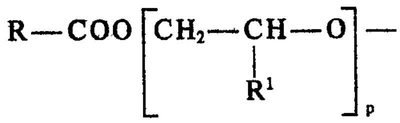
(IX)

symbolisieren. Darin bedeuten R Alkyl oder Alkenyl mit 10 bis 22, vorzugsweise 16 bis 18 C-Atomen, $R^1$ Wasserstoff oder $-CH_3$, vorzugsweise Wasserstoff, und p eine Zahl von 20 bis 80, vorzugsweise 35 bis 55.

Die folgenden Ausführungsbeispiele veranschaulichen die vorliegende Erfindung, wobei alle Prozentangaben sich auf Gewicht beziehen.

## Beispiel 1

Man klotzt ein mercerisiertes Mischgewebe aus Polyester-Baumwolle 65 : 35 mit einem Ansatz, bestehend aus 100 Gewichtsteilen einer 20%igen Flüssigeinstellung des Farbstoffes der Formel X

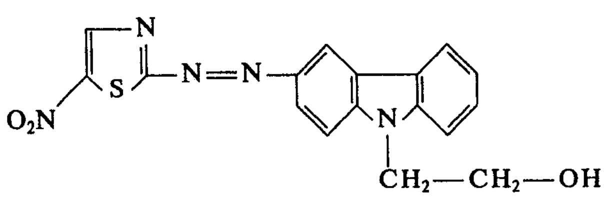
(X)

40 Gewichtsteilen der flüssigen Handelsform von C.I. Reactiv Yellow 17, C.I. Nr. 18 852, 808 Gewichtsteilen Wasser kalt, 10 Gewichtsteilen m-nitrobenzolsulfonsaurem Natrium, 20 Gewichtsteilen eines Antimigriermittels auf Polyacrylsäurebasis, 2 Gewichtsteilen Mononatriumphosphat, 20 Gewichtsteilen Natriumformiat.

Man trocknet vorsichtig in einer mit Heißluft von 80—100° C beheizten Kammer, in der die Ware über Walzen vertikal auf- und abgelenkt wird und überdruckt im Filmdruck mit einer Druckpaste aus 25 Gewichtsteilen der Handelsform von [5-(3,6-Dichlorpyridazin-4-yl-carbonylamino)-2-methyl-3-sulfophenyl]-3-carboxy-4-(2-sulfophenylazo)-5-pyrazolon-(5), 40 Gewichtsteilen der flüssigen Handelsform von C.I. Reactiv Yellow 2, C.I. Nr. 18 972, 150 Gewichtsteilen Harnstoff, 199 Gewichtsteilen Wasser kalt, 10 Gewichtsteilen m-nitrobenzolsulfonsaurem Natrium, 500 Gewichtsteilen Stammverdickung, die sich aus 230 Gewichtsteilen einer wäßrigen 4%igen Alginatverdickung, 80 Gewichtsteilen einer wäßrigen 10%igen Stärkeätherverdickung, 85 Gewichtsteilen Wasser, 25 Gewichtsteilen einer wäßrigen 10%igen Lösung des Kondensationsproduktes von Polyglykol 2000 mit Stearinsäure und 80 Gewichtsteilen Schwerbenzin zusammensetzt, 40 Gewichtsteilen Natriumhydrogencarbonat, 30 Gewichtsteilen Natriumhydrogensulfitlösung der Dichte 1,36 $g \cdot cm^{-2}$, 6 Gewichtsteilen 40%iger Glyoxallösung.

Nach dem Trocknen wird 7 Minuten bei 175° C mit überhitztem Wasserdampf fixiert und wie im Beispiel 1 angegeben nachbehandelt.

Man erhält gelbe Bunteffekte auf einem rubinroten Boden.

Verwendet man anstelle von 30 Teilen des Farbstoffes der Formel X 20 Teile des Farbstoffgemisches

der Formel XI

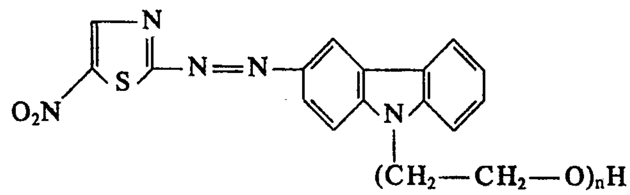

(XI)

worin n 50% = 1
35% = 2
10% = 3
5% = 4

ist, so erhält man einen rubinfarbenen Druck praktisch gleicher Farbstärke mit sehr guten coloristischen Eigenschaften, insbesondere mit gelben Bunteffekten und einer guten Licht-, Trockenhitzefixier-, Reib- und Waschechtheit mit scharfen Konturen.

## Patentansprüche

1. Verfahren zur Herstellung von Reserveeffekten auf Textilmaterialien auf Basis von Mischfasern aus Polyester und Cellulose, insbesondere Polyester-Baumwollfasern, durch Imprägnieren der Materialien mit Farbflotten, die neben üblichen Färbe- und Klotzhilfsmitteln Dispersions- und Reaktivfarbstoffe enthalten, die mit den Reservierungsmitteln reagieren und die gegebenenfalls weitere gegen die Reservierungsmittel beständige Dispersions- und Reaktivfarbstoffe und gegebenenfalls Alkaliformiat enthalten, Trocknen oder Antrocknen der geklotzten Materialien und anschließendes Aufdrucken einer Reservepaste, die gewünschtenfalls neben dem Reservierungsmittel gegen das Reservierungsmittel beständige Dispersions- und Reaktivfarbstoffe enthält, Wärmebehandlung bei Temperaturen von 100 bis 190°C und gegebenenfalls daran anschließendes alkalisches Fixieren des Reaktivfarbstoffes in an sich bekannter Weise, dadurch gekennzeichnet, daß als ätzbare Dispersionsfarbstoffe solche der Formel VII

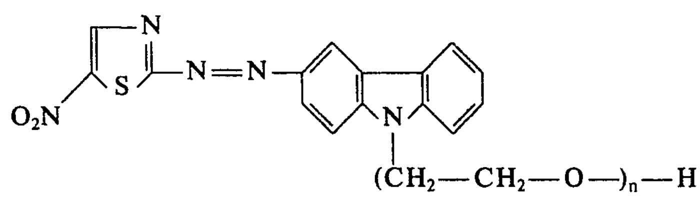

(VII)

worin n eine Zahl von 1 bis 9 bedeutet, eingesetzt werden, als ätzbare Reaktivfarbstoffe solche, die reaktive Reste der Formeln III bis VI

$$—SO_2—CH_2—CH_2—hal \quad (III)$$

$$—SO_2—CH_2—CH_2—O—SO_3M \quad (IV)$$

$$—NH—SO_2—CH_2—CH_2—O—SO_3M \quad (V)$$

$$—SO_2—CH{=}CH_2 \quad (VI)$$

worin M Wasserstoff oder ein Metallkation und hal Halogen bedeuten, enthalten, und eine Reservepaste, die als Reservierungsmittel a) ein Alkalisulfit oder aber ein Alkalihydrogensulfit in Kombination mit Alkalicarbonat oder Alkalihydrogencarbonat und gegebenenfalls einem Aldehyd und b) gegebenenfalls ein nichtionogenes Detergens enthält, eingesetzt werden.

2. Verfahren gemäß Anspruch 1, dadurch gekennzeichnet, daß ätzbare Dispersionsfarbstoffe der Formel VII eingesetzt werden, in denen n eine Zahl von 1 bis 5 ist.

3. Verfahren gemäß den Ansprüchen 1 und 2, dadurch gekennzeichnet, daß als ätzbare Dispersionsfarbstoffe Mischungen von Farbstoffen der Formel VII eingesetzt werden.

4. Verfahren gemäß den Ansprüchen 1 bis 3, dadurch gekennzeichnet, daß als ätzbare Reaktivfarbstoffe solche, die reaktive Reste der Formeln IV und V enthalten, eingesetzt werden.

5. Verfahren gemäß den Ansprüchen 1 bis 4, dadurch gekennzeichnet, daß die Reservepaste als Reservierungsmittel ein vorgefertigtes Aldehyd-Alkalihydrogensulfit-Addukt enthält.

6. Verfahren gemäß den Ansprüchen 1 bis 5, dadurch gekennzeichnet, daß die eingesetzten Druckpasten pro kg 30 bis 250 g eines Hilfsmittels der allgemeinen Formel VIII

$$C_nH_{2n}+2\,m[O(CH_2-CH(CH_3)O)_{x/m}-H]_m \quad \text{(VIII)}$$

wobei n eine ganze Zahl von 2 bis 6, m eine ganze Zahl von 1 bis 6 und x eine Zahl von 20 bis 60 ist, mit der Maßgabe, daß m kleiner oder gleich n ist, enthalten.

7. Verfahren gemäß den Ansprüchen 1 bis 6, dadurch gekennzeichnet, daß die Druckpasten zusätzlich zu den Hilfsmitteln der Formel VIII pro kg 0,2 bis 2 g Veresterungsprodukte von höhermolekularen Polyglycolen mit höheren Alkan- und Alkencarbonsäuren enthalten.

8. Verfahren gemäß den Ansprüchen 1 bis 7, dadurch gekennzeichnet, daß die Reservepaste als nichtionogenes Detergens einen Polyglycol-Carbonsäureester enthält.

## Claims

1. Process for production of resist effects on textile materials based on mixed fibres of polyester and cellulose, in particular polyester-cotton fibres, by impregnating the materials with dye liquors containing, besides the usual dyeing and padding auxiliaries, disperse dyestuffs and reactive dyestuffs which react with the resisting agents and which optionally contain further disperse and reactive dyestuffs resistant to the resisting agents and optionally alkali metal formiate, drying or partially drying the padded materials and subsequently printing on the materials a resist paste which, if desired, contains, besides the resisting agent, disperse and reactive dyestuffs resistant to the resisting agent, heat-treating the materials at temperatures of 100 to 190° C, and optionally subsequently fixing the reactive dyestuff under alkaline conditions in a manner known per se, characterised in that the dischargeable disperse dyestuffs are of the formula VII

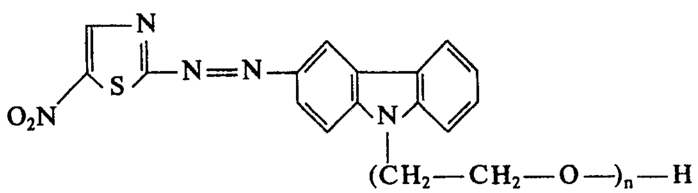

(VII)

wherein n is a number from 1 to 9, the dischargeable reactive dyestuffs are those containing reactive moieties of the formulae III to VI

$$-SO_2-CH_2-CH_2-hal \quad \text{(III)}$$

$$-SO_2-CH_2-CH_2-O-SO_3M \quad \text{(IV)}$$

$$-NH-SO_2-CH_2-CH_2-O-SO_3M \quad \text{(V)}$$

$$-SO_2-CH=CH_2 \quad \text{(VI)}$$

wherein M is hydrogen or a metal cation and hal is halogen, and a resist paste which contains as the resisting agent a) alkali metal sulphite or an alkali metal bisulphite in combination with an alkali metal carbonate or alkali metal bicarbonate and optionally aldehyde and b) optionally a nonionic detergent.

2. Process according to claim 1 characterised in that dischargeable disperse dyestuffs of the formula VII are employed wherein n is a number from 1 to 5.

3. Process according to claims 1 and 2 characterised in that the dischargeable disperse dyestuffs employed are mixtures of dyestuffs of the formula VII.

4. Process according to claims 1 to 3 characterised in that the dischargeable reactive dyestuffs used contain reactive moieties of the formulae IV and V.

5. Process according to claims 1 to 4 characterised in that said resist paste contains a preformed aldehyde/alkali metal bisulphite addition reaction product as the resisting agent.

6. Process according to claims 1 to 5 characterised in that the printing pastes employed contain 30 to 250 grams per kilogram of paste of an auxiliary of the general formula VIII

$$C_nH_{2n}+2\text{-}m[O(CH_2-CH(CH_3)O)_{x/m}-H]_m \quad \text{(VIII)}$$

wherein n is an integer from 2 to 6, m is an integer from 1 to 6 and x is a number from 20 to 60, with the proviso that m is less than or equal to n.

7. Process according to claims 1 to 6 characterised in that the printing pastes, in addition to the auxiliaries of formula VIII, contain 0.2 to 2 grams per kilogram of paste of the esterification products of high-molecular polyglycols with higher alkanecarboxylic and aldenecarboxylic acids.

8. Process according to claims 1 to 7 characterised in that the resist paste contains a polyglycol carboxylic acid ester nonionic detergent.

**Revendications**

1. Procédé de production d'effets de réserve sur des matieres textiles à base de fibres mélangées de polyester et de cellulose, notamment des fibres de polyester et de coton, par imprégnation des matières par des bains de teinture qui, en plus des adjuvants usuels de teinture et de foulardage, contiennent des colorants de dispersion et des colorants réactifs qui réagissent avec les agents de formation de réserve et qui contiennent éventuellement d'autres colorants de dispersion et colorants réactifs stables en présence des agents de formation de réserve et éventuellement contiennent du formiate alcalin, séchage ou début de séchage des matières foulardées puis impression d'une pâte de réserve qui en plus de l'agent de production d'une réserve contient éventuellement des colorants de dispersion et des colorants réactifs stables en présence de l'agent de formation d'une réserve, traitement à chaud à des températures de 100° à 190°C et éventuellement ensuite fixage alcalin du colorant réactif de façon connue en soi, procédé caractérisé en ce qu'on utilise comme colorants de dispersion rongeables ceux de formule VII:

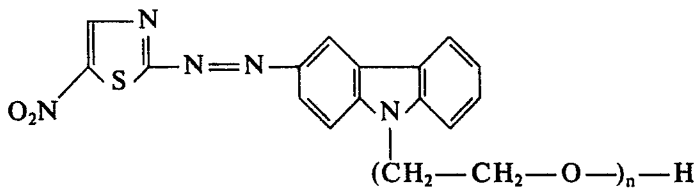

(VII)

(dans laquelle n est un nombre valant 1 à 9), comme colorants réactifs rongeables ceux qui contiennent les radicaux réactifs répondant aux formules III à VI:

$$-SO_2-CH_2-CH_2-hal \quad (III)$$

$$-SO_2-CH_2-CH_2-O-SO_3M \quad (IV)$$

$$-NH-SO_2-CH_2-CH_2-O-SO_3M \quad (V)$$

$$-SO_2-CH=CH_2 \quad (VI)$$

(dans lesquelles M représente de l'hydrogène ou un cation de métal et hal de l'halogène), et une pâte de réserve qui contient comme agent de formation de réserve a) un sulfite alcalin ou bien un hydrogénosulfite alcalin en combinaison avec du carbonate alcalin ou de l'hydrogénocarbonate alcalin et éventuellement un aldéhyde, et b) éventuellement un détergent non ionogène.

2. Procédé selon la revendication 1, caractérisé en ce qu'on utilise des colorants de dispersion rongeables, répondant à la formule VII, dans laquelle n est un nombre valant 1 à 5.

3. Procédé selon les revendications 1 et 2, caractérisé en ce qu'on utilise comme colorants de dispersion rongeables des mélanges de colorants répondant à la formule VII.

4. Procédé selon les revendications 1 à 3, caractérisé en ce qu'on utilise comme colorants réactifs rongeables ceux qui contiennent des radicaux réactifs de formules IV et V.

5. Procédé selon les revendications 1 à 4, caractérisé en ce que la pâte de réserve contient comme agent de formation d'une réserve un produit d'addition aldéhyde/hydrogénosulfite alcalin préformé.

6. Procédé selon les revendications 1 à 5, caractérisé en ce que les pâtes d'impression que l'on utilise contiennent, par kilogramme, 30 à 250 g d'un adjuvant de formule générale VIII:

$$C_nH_{2n}+2\text{-}m[O(CH_2-CH(CH_3)O)_{x/m}-H]_m \quad (VIII)$$

dans laquelle n est un nombre entier valant 2 à 6, m est un nombre entier valant 1 à 6 et x est un nombre valant 20 à 60, étant bien entendu que m est inférieur ou égal à n.

7. Procédé selon les revendications 1 à 6, caractérisé en ce que les pâtes d'impression contiennent, en plus des adjuvants de formule VIII, par kilogramme, 0,2 à 2 g de produits d'estérification de polyglycols à poids moléculaire élevé avec des acides alcane- et alcène-carboxyliques supérieurs.

8. Procédé selon les revendications 1 à 7, caractérisé en ce que la pâte de réserve contient comme détergent non ionogène un ester d'acide carboxylique et de polyglycol.